# FASCICULE DE BREVET EUROPEEN

(11) **EP 0 633 617 B1**
(45) Date de publication et mention de la délivrance du brevet: **28.01.1998**
(21) Numéro de dépôt: 94401554.4
(22) Date de dépôt: 06.07.1994
(51) Int. Cl.: H01M 4/50, H01M 10/40

(54) **Générateur électrochimique rechargeable au lithium et son procédé de realisation**
Wiederaufladebarer Lithiumenthaltender elektrochemischer Stromgenerator und Verfahren zu ihrer Herstellung
Dechargeable lithium containing electrochemical generator and method of manufacture

(30) Priorité: 09.07.1993 FR 9308484
(43) Date de publication de la demande: 11.01.1995
(73) Titulaire: ALCATEL ALSTHOM COMPAGNIE GENERALE D'ELECTRICITE, 75008 Paris (FR)
(72) Inventeur: Lecerf, Andre, F-35043 Rennes Cedex (FR); Biensan, Philippe, F-91360 Epinay Sur Orge (FR); Baudry, Sylvie, F-86240 Fontaine le Comte (FR)
(74) Mandataire: Buffière, Michelle

(56) Documents cités:
- EP-A- 0 265 950
- EP-A- 0 370 684
- EP-A- 0 413 313
- WO-A-91/11032
- GB-A- 2 251 119
- CHEMISTRY EXPRESS, vol.7, no.3, Mars 1992, JAPAN pages 193 - 196 TSUTOMU OHZUKU ET AL 'LiMnO2 AS CATHODE FOR SECONDARY LITHIUM CELL'
- EXTENDED ABSTRACTS - ABSTRACT NR 71, vol.84, no.2, Octobre 1984, PRINCETON, NEW JERSEY US page 103 J. B. GOODENOUGH 'MANGANESE OXIDES AS BATTERY CATHODES'
- EXTENDED ABSTRACTS - ABSTRACT NR 47, vol.90, no.2, 1990, PRINCETON, NEW JERSEY US pages 74 - 75 TSUTOMU OHZUKU ET AL 'SYNTHESIS AND CHARACTERIZATION OF LixMnO2 FOR RECHARGEABLE LITHIUM CELL'
- MATERIALS RESEARCH BULLETIN, vol.25, no.2, 1990, OXFORD GB pages 173 - 182 M H ROSSOUW ET AL 'STRUCTURAL ASPECTS OF LITHIUM-MANGANESE-OXIDE ELECTRODES FOR RECHARGEABLE LITHIUM BATTERIES'
- CHEMISTRY EXPRESS, vol.4, no.12, 1989, JAPAN pages 777 - 780 TSUTOMU OHZUKU ET AL 'PRELIMINARY RESULTS ON SYNTHESIS AND CHARACTERIZATION OF LixMnO2 FOR RECHARGEABLE LITHIUM CELL'
- PATENT ABSTRACTS OF JAPAN vol. 16, no. 291 (E-1224) 26 Juin 1992 & JP-A-04 075 267 (SANYO ELECTRIC CO LTD) 10 Mars 1992
- PATENT ABSTRACTS OF JAPAN vol. 17, no. 698 (E-1481) (6327) 20 Décembre 1993 & JP-A-05 242 889 (MATSUSHITA ELECTRIC IND CO) 21 Septembre 1993

## Description

La présente invention concerne un générateur électrochimique rechargeable au lithium à électrolyte non aqueux, dont les performances sont améliorées par l'utilisation d'une cathode appropriée. L'invention a également pour objet le procédé de réalisation d'un tel générateur.

Parmi les matières actives cathodiques utilisées dans les générateurs électrochimiques rechargeables au lithium, les matériaux à base de bioxyde de manganèse lithié ont fait l'objet de nombreux essais. Certains d'entre eux se sont révélés peu ou pas rechargeables, c'est le cas par exemple de Li₂MnO₃, ou des dérivés de β-MnO₂ et γ-MnO₂. Pour les matériaux à structure spinelle, comme LiMn₂O₄, Li₁₋ₓMn₂O₄, Li₁₊ₓ Mn₂O₄ (décrit dans le brevet américain US-5,196,279), ou λ-MnO₂, les capacités spécifiques des générateurs diminuent rapidement après quelques cycles. Néanmoins il existe des composés, comme celui décrit dans le brevet français FR-2 644 295 obtenu à parti de α-MnO₂, ou bien encore celui dérivé de Li₂MnO₃ décrit dans le brevet français FR-6 656 957, dont la capacité en cyclage est stable mais qui présentent une tension de décharge inférieure à 3 Volts. L'énergie volumique des générateurs utilisant ces composés est peu élevée.

On connait par ailleurs des matériaux électrochimiquement cyclables avec des tensions moyennes en décharge supérieures à 3,5 Volts, comme par exemple les oxydes métalliques lithiés LiCoO₂, LiNiO₂, ou LiNi₁₋ₓ CoₓO₂. Les oxydes de nickel et de cobalt présentent l'inconvénient d'être beaucoup plus coûteux que le bioxyde de manganèse, de plus leur production est limitée géographiquement à des zones à risques.

La présente invention concerne en particulier un générateur électrochimique rechargeable au lithium dont les énergies massique et volumique sont améliorées par l'utilisation d'un matériau cathodique de tension de décharge élevée et moins coûteux que ceux connus à ce jour.

L'objet de la présente invention est un générateur électrochimique rechargeable au lithium comportant une cathode, une anode choisie parmi le lithium et ses alliages, un matériau carboné lithié et un matériau carboné dans lequel le lithium est capable de s'insérer, et un électrolyte constitué par une solution d'un sel de lithium dans un solvant non aqueux, générateur caractérisé par le fait que ladite cathode comporte au moins un composé qui est un oxyde de manganèse et de lithium présentant la combinaison des caractéristiques suivantes: ledit composé est monophasé de couleur jaune-vert, ledit composé à une structure cristalline orthorhombique dont les paramètres de maille sont les suivants: a= 0,459 ± 0,004nm b= 0,577 ± 0,004nm, et c= 0,281 ± 0,003nm, ledit composé contient des ions lithium dans un rapport molaire Li/Mn tel que 0,85 ≤ Li/Mn ≤ 1,10, et après une première charge, la décharge dudit composé, conduisant à l'insertion d'environ un atome de lithium par mole dudit composé, s'effectue sur deux paliers dont le plus élevé a une tension moyenne supérieure à 3,5 Volts par rapport au lithium.

De préférence, le rapport molaire est tel que 0,90 ≤ Li/Mn ≤ 1,05.

Le composé est de couleur jaune-vert et le degré de valence du manganèse est III (Mn³⁺), ce qui le distingue des composés de couleur brun-noir décrits dans la littérature.

Le composé est défini par un spectre de diffraction des rayons X, dont les raies les plus intenses sont:

| | | | | |
|---|---|---|---|---|
| d (nm) | 0,57±0,01 | 0,360±0,005 | 0,229±0,005 | 0,202±0,005 |
| [hkl] | [010] | [110] | [200] | [021] |

L'intensité de la seconde raie [110] est très sensible à la valeur du rapport moléculaire Li/Mn. Elle est d'autant plus intense que ce rapport est plus élevé. Elle s'élargit lorsque le rapport Li/Mn devient inférieur à 0,95.

Les cations du réseau, et en particulier le lithium, occupent seulement les sites octaèdriques, les sites tétraèdriques ne contiennent pas de cations.

Le matériau anodique est choisi parmi le lithium et un alliage de lithium, par exemple avec l'aluminium ou le zinc dans une proportion variant entre 0% et 20% en poids.

Le matériau cathodique est préparé à l'état déchargé, et subit une première charge jusqu'à une tension supérieure à 4V/Li, par exemple 4,3V/Li. La décharge consécutive du matériau cathodique selon l'invention s'effectue alors en deux paliers. Pour des régimes de décharge inférieurs ou égaux à C/20 (soit la capacité C du matériau déchargée en 20 heures), un premier palier se situe à une tension moyenne comprise entre 3,5V/Li et 4,5V/Li, qui permet d'atteindre le composé Li_{0,5}MnO₂, et un second palier se trouve à une tension moyenne comprise entre 2,5V/Li et 3,5V/Li, qui complète la réinsertion du lithium jusqu'au composé LiₓMnO₂ où x est proche de 1.

Le composé après un premier cycle présente un diagramme de diffraction dont les raies les plus intenses sont: 0,48±0,01nm, 0,25±0,01nm, 0,20±0,01nm, et 0,15±0,01nm, le premier cycle comportant une charge suivie d'une décharge.

Une première charge permet d'extraire le lithium initialement présent dans le composé, dont une partie est réinséré à la décharge suivante.

Les raies du composé électroformé, compte-tenu de leurs intensités, s'apparentent à celles observées pour une phase hexagonale de type LiNiO₂ décrit dans la fiche de données cristallographiques de référence JCPDS 9-63. Une partie du lithium de synthèse reste dans les sites octaèdriques et contribue à la stabilité de la structure.

Ledit composé contient initialement une quantité de lithium susceptible d'être désinsérée à la première charge supérieure à la quantité de lithium pouvant être insérée et désinsérée réversiblement aux cycles suivants.

Cet excès de capacité disponible est avantageusement utilisé pour compenser la perte de capacité au premier cycle attribuable à la capacité de passivation de l'anode de carbone. Suivant le type de carbone employé, on choisira les bornes de tension du cyclage de telle sorte que l'excès de capacité au premier cycle compense la perte due à l'électrode de carbone sans nécessiter d'excès de matériau cathodique. Dans un accumulateur comportant une anode de lithium ou d'alliage de lithium, cet excès de capacité présente également l'avantage de pouvoir être utilisé comme complément pour supléer la perte de lithium due à la mauvaise réversibilité de l'anode.

Le sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI), le trifluorométhanesulfoneméthide de lithium LiC(CF₃SO₂)₃ (LiTFSM), et leurs mélanges.

Le solvant non aqueux est un solvant organique comportant un mélange d'éthers et/ou d'esters, les esters étant choisis parmi les carbonates de propylène (PC), d'éthylène (EC), de butylène(BC), de diéthyle (DEC), de diméthyle (DMC), et leurs mélanges.

La présente invention a également pour objet un procédé de réalisation d'un générateur électrochimique dans lequel ledit composé est obtenu à l'état déchargé de la manière suivante.

On réalise un mélange comportant un oxyde de manganèse, par exemple Mn₂O₃, et de la lithine LiOH,H₂O dans un rapport molaire Li/Mn tel que 0,85 ≤ Li/Mn ≤ 1,10.

Ensuite le mélange subit un traitement thermique sous une atmosphère non oxydante avec une montée progressive en température jusqu'à une température maximale comprise entre 500°C et 900°C. Le chauffage progressif a pour but d'éviter la formation de l'oxyde de lithium Li₂O qui est très peu réactif. C'est aussi pour cette raison que le chauffage doit être réalisé à l'abri de l'oxygène: l'azote ou tout autre gaz inerte peut convenir, mais on peut également opérer sous atmosphère réductrice, par exemple en utilisant un mélange gazeux contenant de l'hydrogène.

Selon une première variante de réalisation, le traitement thermique est effectué sous atmosphère neutre à 300°C pendant 2 heures, puis à 500°C pendant 3 heures, et enfin à 700°C pendant 5 heures.

Selon une seconde variante de réalisation, le traitement thermique est effectué sous atmosphère neutre à 300°C pendant 2 heures, puis à 500°C pendant 3 heures, et enfin sous atmosphère réductrice à 700°C pendant 2 heures.

Selon une troisième variante de réalisation, le traitement thermique est effectué sous atmosphère neutre à 300°C pendant 2 heures, puis à 500°C d'abord sous atmosphère réductrice pendant 1 heure, puis sous atmosphère neutre pendant 2 heures, et enfin sous atmosphère réductrice à 700°C pendant 2 heures.

La cathode est réalisée de la manière suivante:
- on effectue le mélange dudit matériau avec un matériau conducteur et un liant choisi parmi le polyéthylène, ses copolymères et ses dérivés,
- on associe ledit mélange à un collecteur de courant, et la cathode est introduite dans ledit générateur.

L'invention sera mieux comprise et d'autres avantages et particularités apparaîtront à la lecture des exemples suivants de modes de réalisation, donnés bien entendu à titre illustratif mais nullement limitatif, accompagnés des dessins annexés parmi lesquels:
- la figure 1 représente très schématiquement en vue semi-coupée un exemple de générateur rechargeable de type bouton,
- la figure 2 donne les courbes de charge et de décharge d'un exemple de générateur contenant l'oxyde de manganèse et de lithium connu LiMnO₂ préparé selon le mode opératoire décrit sur la fiche de données cristallographiques JCPDS 35-749, la tension V en volts est portée en ordonnée en fonction de la capacité spécifique en Ah/kg d'oxyde de manganèse et de lithium en abcisse,
- la figure 3 montre le diagramme de diffraction des rayons X d'un composé B selon l'invention,
- la figure 4 donne la courbe de première charge d'un exemple de générateur selon l'invention contenant un composé B correspondant au diagramme de la figure 3, la tension V en volts est portée en ordonnée en fonction de la capacité spécifique en Ah/Kg du composé B en abcisse,
- la figure 5 donne les courbes de charge et de décharge d'un exemple de générateur selon l'invention contenant un composé B correspondant au diagramme de la figure 3, la tension V en volts est portée en ordonnée en fonction de la capacité en mAh du générateur en abcisse,
- la figure 6 montre le diagramme de diffraction des rayons X après la décharge d'un composé B selon l'invention correspondant au diagramme de la figure 3,
- la figure 7 montre le diagramme de diffraction des rayons X d'un composé C selon l'invention pour une variante du procédé de préparation,
- la figure 8 donne les courbes de charge et de décharge d'un exemple de générateur selon l'invention contenant un composé C correspondant au diagramme de la figure 7, la tension V en volts est portée en ordonnée en fonction de la capacité en mAh du générateur en abcisse,
- la figure 9 montre le diagramme de diffraction des rayons X d'un composé D selon l'invention pour une autre variante du procédé de préparation,
- la figure 10 donne les courbes de charge et de décharge d'un exemple de générateur selon l'invention contenant un composé D correspondant au diagramme de la figure 9, la tension V en volts est portée en ordonnée en fonction du temps en heures en abcisse.

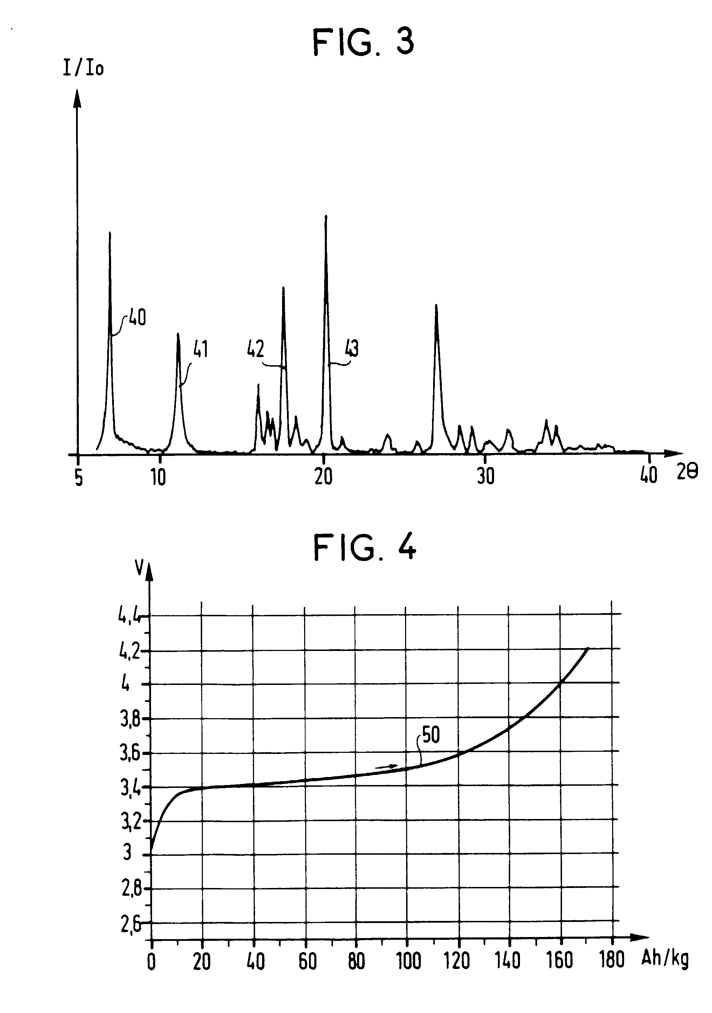

Sur les figures 3, 6, 7, et 9 se trouve en abcisse l'angle de diffraction 2θ en degrés et en ordonnée l'intensité relative des raies I/Iₒ en %, la raie la plus haute correspondant à la valeur de 100%.

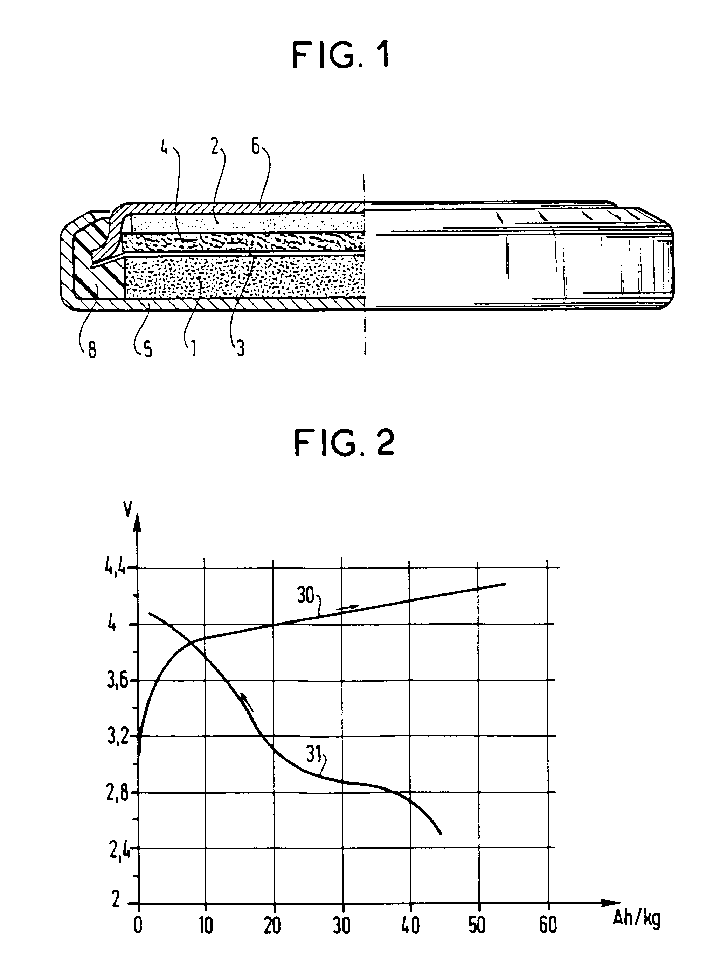

Afin d'expérimenter les propriétés électrochimiques des matériaux selon l'invention, un accumulateur de type bouton est constitué comme représenté sur la figure 1.

Le matériau cathodique est mélangé intimement avec du noir d'acétylène, du graphite et du polytétrafluoroéthylène dans les proportions pondérales suivantes:
- matériau cathodique 80% en poids,
- noir d'acétylène 7,5% en poids,
- graphite 7,5% en poids, et
- polytétrafluoroéthylène 5% en poids.

Une cathode 1 est fabriquée en incrustant une certaine quantité de ce mélange sur une grille d'aluminium. Après séchage et découpe avec un outil approprié, on obtient une électrode ayant la forme d'un disque de 16mm de diamètre et d'environ 0,5mm d'épaisseur.

L'anode 2 est constituée par un disque de lithium de diamètre 20mm et de masse 110mg environ.

Le solvant d'électrolyte est constitué par un mélange de carbonate de propylène, de carbonate d'éthylène et de carbonate de diméthyle dans des proportions volumiques respectives de 20%, 20%, et 60%. On y dissous un soluté, par exemple l'hexafluorophosphate de lithium LiPF₆, à la concentration de 1 mole/litre.

Les électrodes 1 et 2 sont séparées par un séparateur polypropylène microporeux 3 et un séparateur réservoir 4 en fibre de polypropylène sous forme de feutre.

L'ensemble est disposé dans une coupelle 5 fermée de manière étanche par un couvercle 6 par l'intermédiaire d'un joint 8.

### EXEMPLE 1

Le composé LiMnO₂ de l'art antérieur a été synthétisé suivant le procédé décrit dans la fiche de données cristallographiques de référence JCPDS 35-749. Le matériau A obtenu est noir.

Ce matériau A est introduit dans un accumulateur de type bouton identique à celui représenté sur la figure 1. Cet accumulateur est soumis à un cyclage I. On effectue d'abord une charge à un courant de 0,5mA jusqu'à une tension de 4,3 Volts. Ensuite l'accumulateur est cyclé à un courant constant de 0,5mA entre les bornes de tension 4,3V et 2,5V. La figure 2 représente un cycle de charge 30 et décharge 31 de cet accumulateur. La capacité massique déchargée en cyclage I est de l'ordre de 40Ah/Kg après une vingtaine de cycles pour le matériau A.

Sur un accumulateur de type bouton identique à celui représenté sur la figure 1 contenant le matériau A, un cyclage II est réalisé. On effectue d'abord une charge à un courant de 0,5mA jusqu'à une tension de 4,3 Volts. Ensuite l'accumulateur est cyclé à un courant constant de 0,5mA entre les bornes de tension 4,3V et 3,0V. La capacité massique déchargée en cyclage II est de l'ordre de 20Ah/Kg après une vingtaine de cycles pour le matériau A.

### EXEMPLE 2

Le matériau B selon l'invention est préparé de la manière suivante. On réalise un mélange comportant d'une part de l'oxyde de manganèse Mn₂O₃, obtenu par thermolyse (700°C) à l'air du produit MnO₂ type "CMD" obtenu par voie chimique, et d'autre part de la lithine LiOH,H₂O dans une proportion telle que le rapport molaire Li/Mn soit égal à 0,97, puis le mélange réalisé est broyé.

Ensuite le mélange broyé subit un premier traitement thermique sous atmosphère neutre (azote) à une température de 300°C pendant 2 heures, puis de 500°C pendant 3 heures, et le mélange traité est de nouveau broyé.

Enfin le mélange est soumit à un second traitement thermique à une température de 700°C pendant 5 heures sous athmosphère neutre.

Le matériau B obtenu est jaune-vert et monophasé. Le diffractogramme est donné par la figure 3. Les premiers pics les plus intenses sont:

| | pic 40 | pic 41 | pic 42 | pic 43 |
|---|---|---|---|---|
| d (nm) | 0,584 | 0,363 | 0,231 | 0,202 |
| I/Iₒ (%) | 93 | 51 | 70 | 100 |
| [hkl] | [010] | [110] | [200] | [021] |

L'analyse chimique du matériau B a donné les résultats suivants:
- composition: 7,21% en poids de lithium et 59% en poids de manganèse,
- degré d'oxydation du manganèse: 3,0,
- rapport moléculaire Li/Mn: 0,97.

La formule de ce composé est donc: Li_{0,97} MnO_{1,99} .

Ce matériau B est introduit dans un accumulateur de type bouton analogue à celui représenté sur la figure 1, mais dont l'électrolyte contient comme soluté le trifluorométhanesulfonimide de lithium (LiTFSI). Cet accumulateur subit une première charge jusqu'à 4,2V à un courant de 0,4mA. La première charge 50 de cet accumulateur, représentée sur la figure 4, a une tension moyenne de l'ordre de 3,6V, la capacité chargée est de 170Ah/Kg. Dans certaines conditions, la capacité chargée peut atteindre 220Ah/Kg ce qui correspond à la désinsertion d'environ 0,8 atomes de lithium par mole et conduit en fin de charge au composé Li_{0,2} MnO₂.

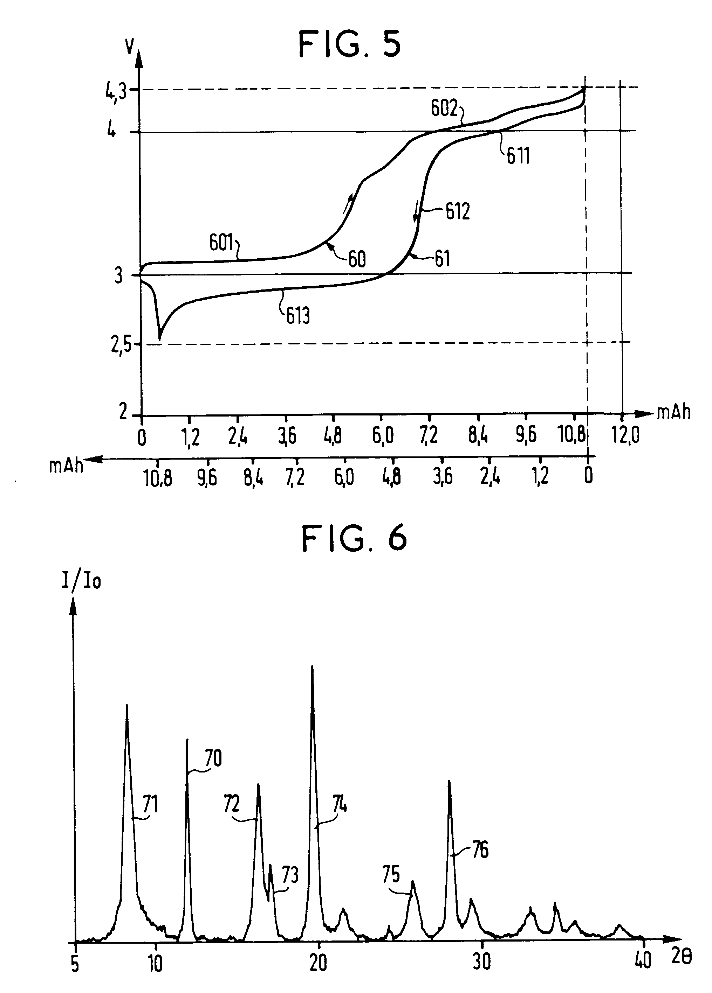

Le matériau B est introduit dans un accumulateur de type bouton identique à celui représenté sur la figure 1. Cet accumulateur est évalué électrochimiquement par le test de cyclage I décrit dans l'exemple 1. La figure 5 représente un cycle de charge 60 et décharge 61 de cet accumulateur.

La décharge 61 s'effectue en deux étapes: un premier palier 611 à une tension moyenne de 3,9V/Li permet d'atteindre le composé Li_{0,5}MnO₂ au point d'inflexion 612, et un second palier 613 autour de 2,9V/Li complète la réinsertion du lithium jusqu'au composé Li_{0,9}MnO₂. La seconde charge 60 présente un premier palier 601 autour de 3,10V et un second palier 602 vers 4,10V.

La capacité massique déchargée en cyclage I est de l'ordre de 175Ah/Kg après une vingtaine de cycles pour le matériau B. Après plus de 60 cycles la capacité est encore de 175Ah/Kg.

Après la décharge 61 du matériau B, on obtient un matériau B' dont la caractérisation par rayons X donne le diffractogramme de la figure 6. Le pic 70 correspond au graphite mélangé au matériau B lors de la réalisation de la cathode.

Si on compare les intensités des raies les plus intenses des diffractogrammes du matériau B' électroformé et de l'oxyde de nickel lithié LiNiO₂ (JCPDS 9-63), rassemblées dans le tableau ci-dessous, la parenté entre les deux matériaux apparaît clairement. Les quelques différences sur d sont dues à la substitution du nickel par le manganèse.

| | matériau B' | | LiNiO₂ | |
|---|---|---|---|---|
| pic n° | d (nm) | I/Iₒ (%) | d (nm) | I/Iₒ (%) |
| 71 | 0,487 | 86 | 0,472 | 100 |
| 72 | 0,251 | 56 | 0,245 | 40 |
| 73 | 0,241 | 29 | 0,235-0,236 | 27 |
| 74 | 0,208 | 100 | 0,204 | 95 |
| 75 | 0,159 | 21 | 0,157 | 20 |
| 76 | 0,146 | 57 | 0,144 | 50 |

### EXEMPLE 3

Le matériau C selon l'invention est préparé de la manière suivante. On réalise un mélange comportant d'une part de l'oxyde de manganèse Mn₂O₃, obtenu par thermolyse (700°C) à l'air du produit MnO₂ type "CMD" obtenu par voie chimique, et d'autre part de la lithine LiOH,H₂O dans une proportion telle que le rapport molaire Li/Mn soit égal à 1,05, puis le mélange réalisé est broyé.

Ensuite le mélange broyé subit un premier traitement thermique sous atmosphère neutre (azote) à une température de 300°C pendant 2 heures, puis à une température de 500°C pendant 3 heures, et le mélange traité est de nouveau broyé.

Enfin le mélange est soumit à un second traitement thermique à une température de 700°C pendant 2 heures sous athmosphère réductrice (azote + 10% d'hydrogène saturé en vapeur d'eau).

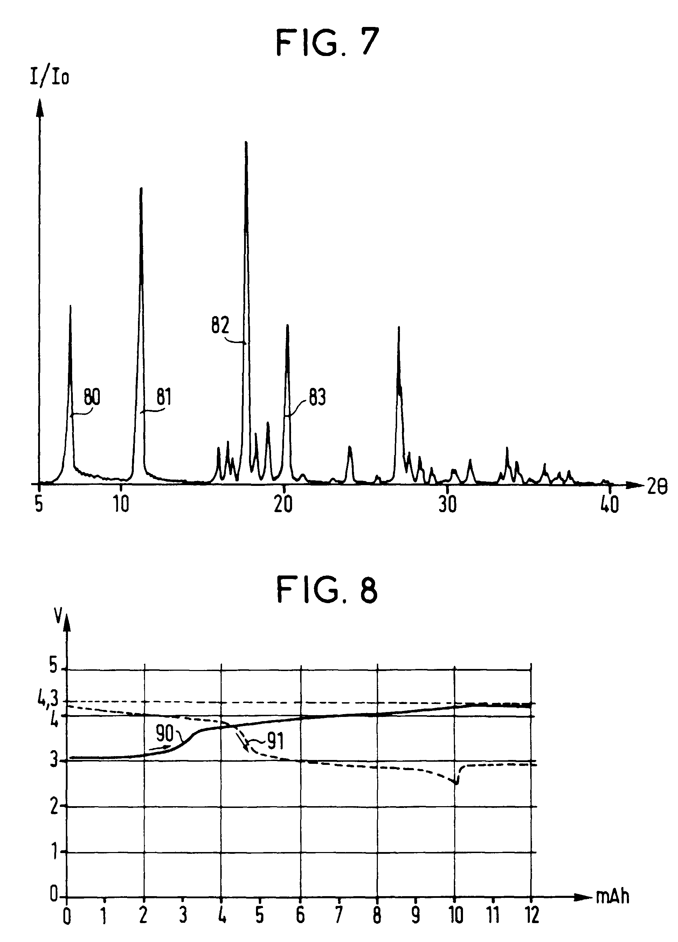

Le diffractogramme du matériau C obtenu est donné par la figure 7. Les premiers pics les plus intenses sont:

| | pic 80 | pic 81 | pic 82 | pic 83 |
|---|---|---|---|---|
| d (nm) | 0,587 | 0,363 | 0,231 | 0,202 |
| I/Iₒ (%) | 51 | 87 | 100 | 48 |
| [hkl] | [010] | [011] | [200] | [021] |

L'analyse chimique du matériau C a donné les résultats suivants:
- composition: 7,71% en poids de lithium et 58,4% en poids de manganèse,
- degré d'oxydation du manganèse: 2,99,
- rapport moléculaire Li/Mn: 1,05.

La formule de ce composé est donc: Li_{1,05} MnO_{2,02} .

Ce matériau C est introduit dans un accumulateur de type bouton identique à celui représenté sur la figure 1. Cet accumulateur est évalué électrochimiquement par le test de cyclage I décrit dans l'exemple 1. La figure 8 représente un cycle de charge 90 et décharge 91 de cet accumulateur. On a chargé 183Ah/kg au cours de la première charge. La tension moyenne en décharge est de 3,3V. La capacité massique déchargée en cyclage I est de l'ordre de 110Ah/Kg après une vingtaine de cycles pour le matériau C. Après plus de 60 cycles la capacité est encore de 110Ah/Kg.

Ce matériau C est introduit dans un accumulateur de type bouton identique à celui représenté sur la figure 1. Cet accumulateur est évalué électrochimiquement par le test de cyclage II décrit dans l'exemple 1. La tension moyenne en décharge est de 3,85V. La capacité massique déchargée en cyclage II est de l'ordre de 65Ah/Kg après une vingtaine de cycles pour le matériau C.

### EXEMPLE 4

Le matériau D selon l'invention est préparé de la manière suivante. On réalise un mélange comportant d'une part de l'oxyde de manganèse Mn₂O₃, obtenu par thermolyse (700°C) à l'air du produit MnO₂ type "CMD" obtenu par voie chimique, et d'autre part de la lithine LiOH,H₂O dans une proportion telle que le rapport molaire Li/Mn soit égal à 1, puis le mélange réalisé est broyé.

Ensuite le mélange broyé subit un premier traitement thermique sous atmosphère neutre (azote) à une température de 300°C pendant 2 heures, puis sous atmosphère réductrice (azote + 10% d'hydrogène saturé en vapeur d'eau) à une température de 500°C pendant 1 heure, enfin sous atmosphère neutre (azote) à une température de 500°C pendant 2 heures. Le mélange traité est de nouveau broyé.

Enfin le mélange est soumit à un second traitement thermique à une température de 700°C pendant 2 heures sous athmosphère réductrice.

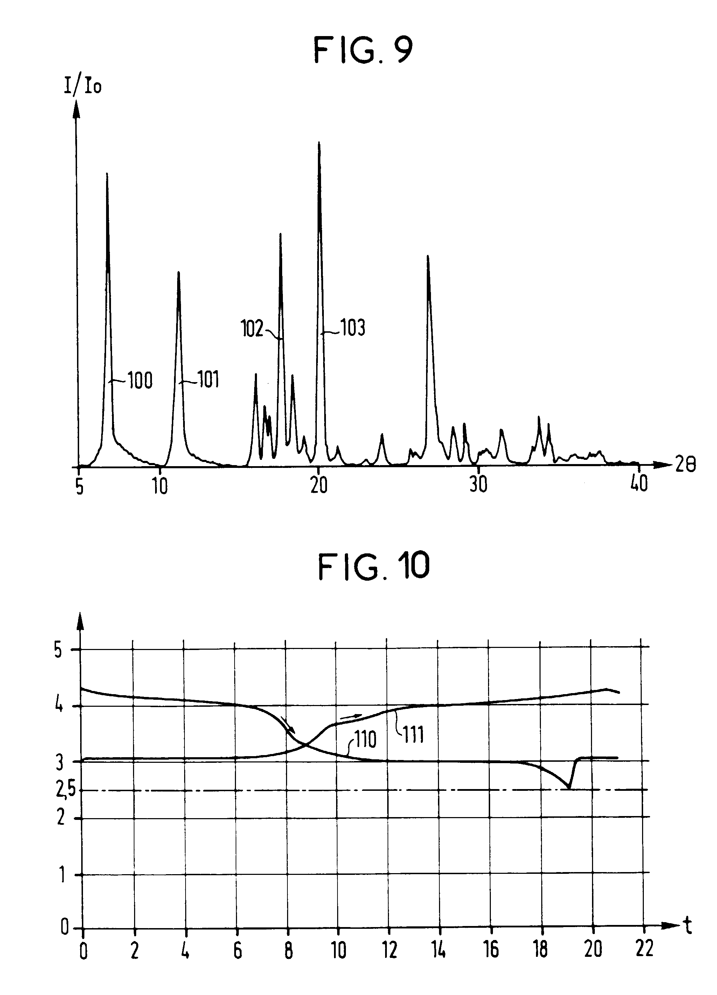

Le diffractogramme du matériau D obtenu est donné par la figure 9. Les premiers pics les plus intenses sont:

| | pic 100 | pic 101 | pic 102 | pic 103 |
|---|---|---|---|---|
| d (nm) | 0,580 | 0,360 | 0,230 | 0,201 |
| I/Iₒ (%) | 91 | 61 | 72 | 100 |
| [hkl] | [010] | [011] | [200] | [021] |

Les paramètres de maille du composé stoechiométrique sont:
a = 0,4592nm b = 0,5768nm c = 0,2812nm

L'analyse chimique du matériau D a donné les résultats suivants:
- composition: 7,38% en poids de lithium et 57,9% en poids de manganèse,
- degré d'oxydation du manganèse: 3,0,
- rapport moléculaire Li/Mn: 1.

La formule de ce composé est donc: LiMnO_{2,00} .

Ce matériau D est introduit dans un accumulateur de type bouton identique à celui représenté sur la figure 1. Cet accumulateur est évalué électrochimiquement par le test de cyclage I décrit dans l'exemple 1. La figure 10 représente un cycle de charge 110 et décharge 111 de cet accumulateur. On a chargé 192Ah/kg au cours de la première charge. La capacité massique en cyclage I est de l'ordre de 165Ah/Kg après une vingtaine de cycles et après plus de 60 cycles, la capacité est encore de 165Ah/Kg de matériau D.

### EXEMPLE 5

Le matériau E selon l'invention est préparé de la même manière que le matériau B décrit dans l'exemple 2. Les premiers pics les plus intenses du diffractogramme sont:

| | | | | |
|---|---|---|---|---|
| d (nm) | 0,58 | 0,363 | 0,231 | 0,202 |
| I/Iₒ (%) | 89 | 48 | 68 | 100 |
| [hkl] | [010] | [110] | [200] | [021] |

L'analyse chimique du matériau E a donné les résultats suivants:
- composition: 7,29% en poids de lithium et 59% en poids de manganèse,
- rapport moléculaire Li/Mn: 0,98.

Le matériau E est introduit dans un accumulateur de type bouton identique à celui représenté sur la figure 1. Cet accumulateur est évalué électrochimiquement par le test de cyclage I décrit dans l'exemple 1. On a chargé 198Ah/kg au cours de la première charge. La capacité massique déchargée en cyclage I est alors de l'ordre de 170Ah/Kg après une vingtaine de cycles, soit un excès de capacité de 28Ah/Kg (14%) à la première charge. Après plus de 60 cycles la capacité est encore de 170Ah/Kg de matériau E.

Ensuite, le matériau E est introduit dans un accumulateur de type bouton identique à celui représenté sur la figure 1. Cet accumulateur est évalué électrochimiquement par le test de cyclage II décrit dans l'exemple 1. La capacité massique déchargée en cyclage II est alors de l'ordre de 85Ah/Kg après une vingtaine de cycles, soit un excès de capacité de 113Ah/Kg (57%) à la première charge.

Les résultats des tests de cyclage précédemment décrits sont rassemblés dans le tableau ci-après.

| cyclage | anode | 1ère charge | cycles suivants | excès |
|---|---|---|---|---|
| Volts | | Ah/Kg | Ah/Kg | % |
| 4,3-2,5 | Li | 198 | 170 | 14 |
| 4,3-3,0 | Li | 198 | 85 | 57 |

### EXEMPLE 6

Le matériau E est introduit dans un accumulateur de type bouton analogue à celui représenté sur la figure 1, mais contenant une anode de carbone de type graphite présentant une irréversibilité en capacité de 20% au premier cycle. Cet accumulateur est évalué électrochimiquement par le test de cyclage I décrit dans l'exemple 1. On a chargé 198Ah/kg au cours de la première charge. La capacité massique déchargée en cyclage I est de l'ordre de 158Ah/Kg après une vingtaine de cycles.

| cyclage | anode | 1ère charge | cycles suivants | perte |
|---|---|---|---|---|
| Volts | | Ah/Kg | Ah/Kg | % |
| 4,3-2,5 | graphite | 198 | 158 | 20 |

### EXEMPLE 7

Le matériau E est introduit dans un accumulateur de type bouton analogue à celui représenté sur la figure 1, mais contenant une anode de carbone de type coke présentant une irréversibilité en capacité de 50% au premier cycle. Cet accumulateur est évalué électrochimiquement par le test de cyclage I décrit dans l'exemple 1. On a chargé 198Ah/kg au cours de la première charge. La capacité massique déchargée en cyclage I est de l'ordre de 99Ah/Kg après une vingtaine de cycles.

| cyclage | anode | 1ère charge | cycles suivants | perte |
|---|---|---|---|---|
| Volts | | Ah/Kg | Ah/Kg | % |
| 4,3-2,5 | coke | 198 | 99 | 50 |

La présente invention s'applique à tout type de générateurs électrochimiques, comme par exemple les formats prismatiques, cylindriques, ou boutons.

## Revendications

1. Générateur électrochimique rechargeable au lithium comportant une cathode, une anode choisie parmi le lithium et ses alliages, un matériau carboné lithié et un matériau carboné dans lequel le lithium est capable de s'insérer, et un électrolyte constitué par une solution d'un sel de lithium dans un solvant non aqueux, générateur caractérisé par le fait que ladite cathode comporte au moins un composé qui est un oxyde de manganèse et de lithium présentant la combinaison des caractéristiques suivantes: ledit composé est monophasé de couleur jaune-vert, ledit composé à une structure cristalline orthorhombique dont les paramètres de maille sont les suivants: a= 0,459 ± 0,004nm b= 0,577 ± 0,004nm, et c= 0,281 ± 0,003nm, ledit composé contient des ions lithium dans un rapport molaire Li/Mn tel que 0,85 ≤ Li/Mn ≤ 1,10, et après une première charge, la décharge dudit composé, conduisant à l'insertion d'environ un atome de lithium par mole dudit composé, s'effectue sur deux paliers dont le plus élevé a une tension moyenne supérieure à 3,5 Volts par rapport au lithium.

2. Générateur électrochimique selon la revendication 1, caractérisé par le fait que ledit composé après un premier cycle présente un diagramme de diffraction dont les raies les plus intenses sont: 0,48±0,01nm, 0,25±0,01nm, 0,20± 0,01nm, et 0,15±0,01nm, ledit premier cycle comportant une charge suivie d'une décharge.

3. Générateur électrochimique selon l'une des revendications 1 et 2, dans lequel ledit composé contient initialement une quantité de lithium susceptible d'être désinsérée à la première charge supérieure à la quantité de lithium pouvant être insérée et désinsérée réversiblement aux cycles suivants.

4. Générateur électrochimique selon l'une des revendications précédentes, caractérisé par le fait que ledit sel de lithium est choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, ou le trifluorométhanesulfoneméthide de lithium, et leurs mélanges.

5. Générateur électrochimique selon l'une des revendications précédentes, caractérisé par le fait que ledit solvant non aqueux est un solvant organique comportant un mélange d'éthers et/ou d'esters, les esters étant choisis parmi les carbonates de propylène, d'éthylène, de butylène, de diéthyle, de diméthyle, et leurs mélanges.

6. Procédé de réalisation d'un générateur électrochimique selon l'une des revendications précédentes, dans lequel ledit composé est obtenu à l'état déchargé de la manière suivante:
- on réalise un mélange comportant un oxyde de manganèse et de la lithine LiOH,H₂O dans un rapport molaire Li/Mn tel que 0,85 ≤ Li/Mn ≤ 1,10,
- ensuite ledit mélange subit un traitement thermique sous une atmosphère non oxydante avec une montée progressive en température jusqu'à une température maximale comprise entre 500°C et 900°C.

7. Procédé selon la revendication 6, dans lequel ledit traitement thermique est effectué sous atmosphère neutre à 300°C pendant 2 heures, puis à 500°C pendant 3 heures, et enfin à 700°C pendant 5 heures.

8. Procédé selon la revendication 6, dans lequel ledit traitement thermique est effectué sous atmosphère neutre à 300°C pendant 2 heures, puis à 500°C pendant 3 heures, et enfin sous atmosphère réductrice à 700°C pendant 2 heures.

9. Procédé selon la revendication 6, dans lequel ledit traitement thermique est effectué sous atmosphère neutre à 300°C pendant 2 heures, puis à 500°C d'abord sous atmosphère réductrice pendant 1 heure, puis sous atmosphère neutre pendant 2 heures, et enfin sous atmosphère réductrice à 700°C pendant 2 heures.

10. Procédé selon la revendication 6, dans lequel ladite cathode est réalisée de la manière suivante:
- on effectue le mélange dudit composé avec un matériau conducteur et un liant choisi parmi le polyéthylène, ses copolymères et ses dérivés,
- on associe ledit mélange à un collecteur de courant.

## Claims

1. Rechargeable lithium cell having a cathode, an anode selected from lithium and alloys of lithium, a carbon- and lithium-containing material or a carbon-containing material into which lithium can be inserted, and an electrolyte constituted by a solution of a lithium salt in a non-aqueous solvent, characterized in that said cathode includes at least one substance which is an oxide of lithium and manganese presenting a combination of the following characteristics: said substance is single-phase and yellow-green in color, said substance has orthorhombic crystal structure with the following lattice parameters: a = 0.459 ± 0.004 nm, b = 0.577 ± 0.004 nm and c = 0.281 ± 0.003 nm, said substance contains lithium ions in a molar ratio of Li/Mn such that 0.85 ≤ Li/Mn ≤ 1.10, and after a first charge, said substance is discharged in two stages leading to the insertion of approximately one atom of lithium per mole of said substance, where the higher stage is at a mean voltage greater than 3.5 volts relative to the lithium.

2. Cell according to claim 1, characterized in that after a first cycle said substance has a diffraction diagram whose most intense lines are 0.48 ± 0.01 nm, 0.25 ± 0.01 nm, 0.20 ± 0.01 nm and 0.15 ± 0.01 nm, said first cycle comprising a charge followed by a discharge.

3. Cell according to claim 1 or 2, in which said substance initially contains a quantity of lithium adapted to be de-inserted on first charge, which quantity is greater than the quantity of lithium that can be inserted and de-inserted reversibly in subsequent cycles.

4. Cell according to any preceding claim, characterized in that said lithium salt is selected from lithium perchlorate, lithium hexafluoroarsenate, lithium hexafluorophosphate, lithium tetrafluoroborate, lithium trifluoromethanesulfonate, lithium trifluoromethanesulfonimide and lithium trifluoromethanesulfonemethide and mixtures thereof.

5. Cell according to any preceding claim, characterized in that said non-aqueous solvent is an organic solvent containing a mixture of ethers and/or esters, the latter selected from propylene, ethylene, butylene, diethyl and dimethyl carbonates and mixtures thereof.

6. Method of manufacturing a cell according to any preceding claim, in which said substance is obtained in the discharged state as follows:
^{•} a mixture is prepared containing an oxide of manganese and lithium hydroxide LiOH,H₂O in a molar ratio Li/Mn such that
0.85 ≤ Li/Mn ≤ 1.10,
^{•} said mixture is then heat treated in a non-oxidizing atmosphere with the temperature progressively increased to a maximum value between 500°C and 900°C.

7. Method according to claim 6 in which said heat treatment is carried out in an inert atmosphere at 300°C for two hours and then at 500°C for three hours and finally at 700°C for five hours.

8. Method according to claim 6, in which said heat treatment is carried out in an inert atmosphere at 300°C for two hours and then at 500°C for three hours and finally at 700°C for two hours in a reducing atmosphere.

9. Method according to claim 6, in which said heat treatment is carried out in an inert atmosphere at 300°C for two hours and then at 500°C, initially in a reducing atmosphere for one hour then in an inert atmosphere for two hours, and finally in a reducing atmosphere at 700°C for two hours.

10. Method according to claim 6, in which said cathode is made as follows:
^{•} said substance is mixed with a conductive material and a binder selected from polyethylene, its copolymers and its derivatives,
^{•} said mixture is associated with a current collector.

## Patentansprüche

1. Wiederaufladbarer elektrochemischer Generator auf Lithiumbasis mit einer Kathode, mit einer Anode aus Lithium oder dessen Legierungen, aus einem Kohlenstoff und Lithium enthaltenden Material und einem kohlenstoffhaltigen Material, in das das Lithium sich einfügen kann, und mit einem Elektrolyten bestehend aus einer Lösung eines Lithiumsalzes in einem nicht-wässrigen Lösungsmittel, dadurch gekennzeichnet, daß die Kathode mindestens eine Verbindung aus einem Mangan- und Lithiumoxid enthält, die in Kombination folgende Merkmale aufweist: die Verbindung ist einphasig und gelbgrün; die Verbindung hat eine orthorhombische Kristallstruktur, deren Gitterparameter folgendermaßen lauten: a = 0,459 ± 0,004nm b = 0,577 ± 0,004nm und c = 0,281 ± 0,003nm; die Verbindung enthält Lithiumionen in einem molaren Verhältnis Li/Mn zwischen 0,85 und 1,10, Grenzen eingeschlossen; nach einer ersten Ladephase erfolgt die Entladung der Verbindung, die zu einer Einfügung von etwa einem Lithiumatom je Mol der Verbindung führt, in zwei Spannungsstufen, deren höherer Wert eine mittlere Spannung von 3,5 Volt bezüglich Lithium besitzt.

2. Elektrochemischer Generator nach Anspruch 1, dadurch gekennzeichnet, daß die Verbindung nach einem ersten Zyklus ein Röntgendiffraktionsdiagramm ergibt, dessen Hauptlinien folgende Werte haben: 0,48±0,01nm, 0,25±0,01nm, 0,20±0,01nm und 0,15±0,01 nm, wobei der erste Zyklus eine Ladung und eine anschließende Entladung enthält.

3. Elektrochemischer Generator nach einem der Ansprüche 1 und 2, in dem die Verbindung ursprünglich eine größere Lithiummenge, die bei der ersten Ladung extrahiert werden konnte, enthält als die Lithiummenge, die reversibel in den nachfolgenden Zyklen eingefügt und extrahiert werden kann.

4. Elektrochemischer Generator nach einem der vorhergehenden Ansprüche, dadurch gekennzeichnet, daß das Lithiumsalz ausgewählt wird unter Lithiumperchlorat, Lithiumhexafluorarsenat, Lithiumhexafluorphosphat, Lithiumtetrafluorborat, Lithiumtrifluormethansulfonat, Lithiumtrifluormethansulfonimid oder Lithiumtrifluormethansulfonmethid und ihren Mischungen.

5. Elektrochemischer Generator nach einem der vorhergehenden Ansprüche, dadurch gekennzeichnet, daß das nicht-wässrige Lösungsmittel ein organisches Lösungsmittel ist, das eine Mischung aus Äthern und/oder Estern enthält, wobei die Ester unter Propylenkarbonat, Äthylenkarbonat, Butylenkarbonat, Diethylkarbonat, Dimethylkarbonat und ihren Mischungen ausgewählt werden.

6. Verfahren zur Herstellung eines elektrochemischen Generators nach einem der vorhergehenden Ansprüche, bei dem die Verbindung im entladenen Zustand auf folgende Weise erhalten wird:
- man erzeugt eine Mischung aus einem Manganoxid und Lithin LiOH,H₂O in einem Molarverhältnis Li/Mn zwischen 0,85 und 1,10, Grenzen inbegriffen,
- man unterwirft diese Mischung einer Wärmebehandlung in einer nicht-oxidierenden Atmosphäre mit einem progressiven Temperaturanstieg bis auf eine maximale Temperatur, die zwischen 500 und 900°C liegt.

7. Verfahren nach Anspruch 6, bei dem die Wärmebehandlung in einer neutralen Atmosphäre bei 300°C während zwei Stunden, dann bei 500°C während drei Stunden und schließlich bei 700°C während fünf Stunden erfolgt.

8. Verfahren nach Anspruch 6, bei dem die Wärmebehandlung in neutraler Atmosphäre bei 300°C während zwei Stunden, dann bei 500°C während drei Stunden und schließlich in reduzierender Atmosphäre bei 700°C während zwei Stunden erfolgt.

9. Verfahren nach Anspruch 6, bei dem die Wärmebehandlung in neutraler Atmosphäre bei 300°C während zwei Stunden, dann bei 500°C zuerst in reduzierender Atmosphäre während einer Stunde und dann in neutraler Atmosphäre während zwei Stunden und schließlich in reduzierender Atmosphäre bei 700°C während zwei Stunden erfolgt.

10. Verfahren nach Anspruch 6, bei dem die Kathode folgendermaßen hergestellt wird:
- man stellt eine Mischung der Verbindung mit einem leitenden Material und einem Bindemittel her, das unter Polyäthylen, seinen Copolymeren und Derivaten ausgewählt wird,
- man bringt diese Mischung auf einen Stromkollektor auf.
